# EUROPÄISCHE PATENTSCHRIFT

(11) **EP 3 092 385 B1**
(45) Veröffentlichungstag und Bekanntmachung des Hinweises auf die Patenterteilung: **28.02.2018**
(21) Anmeldenummer: 14824399.1
(22) Anmeldetag: 12.12.2014
(51) Int. Cl.: F02B 37/22, F02M 26/00

(54) **TRIMMSTELLER FÜR MINDESTENS EINEN VERDICHTER UND BRENNKRAFTMASCHINE**
TRIM ADJUSTER FOR AT LEAST ONE COMPRESSOR AND INTERNAL COMBUSTION ENGINE
ORGANE DE COMPENSATION POUR AU MOINS UN COMPRESSEUR ET MOTEUR À COMBUSTION INTERNE

(30) Priorität: 16.12.2013 DE 102013226081
(43) Veröffentlichungstag der Anmeldung: 16.11.2016
(73) Patentinhaber: Volkswagen Aktiengesellschaft, 38440 Wolfsburg (DE)
(72) Erfinder: ALBERTI, Peter, 38553 Wasbüttel (DE); HINRICHS, Oliver, 31226 Peine (DE); GREINER, Michael, 39116 Magdeburg (DE); KAMMEYER, Jasper, 30169 Hannover (DE); WERNER, Ronny, 01612 Glaubitz (DE); KLEINEN, Marcus, 04668 Grimma (DE); FRERICHS, Simon, 26655 Westerstede (DE)
(86) Internationale Anmeldenummer: PCT/EP2014/077580
(87) Internationale Veröffentlichungsnummer: WO 2015/091268

(56) Entgegenhaltungen:
- EP-A1- 2 570 629
- WO-A1-2007/130947
- WO-A1-2013/074503
- WO-A2-2010/059447
- DE-A1-102008 060 944
- DE-A1-102013 003 418
- US-A1- 2007 266 705

## Beschreibung

Die vorliegende Erfindung betrifft einen Trimmsteller für mindestens einen Verdichter. Im Besonderen umfasst der Trimmsteller mindestens einen Hauptkanal und mindestens einen Bypasskanal. Dem mindestens einen Hauptkanal ist kommunikativ mindestens ein Frischgasstrang für Frischgas zugeordnet. Der mindestens eine Bypasskanal mündet in den Trimmsteller. Mindestens eine Niederdruck-Abgasrückführung ist mit dem mindestens einen Bypasskanal verbunden, so dass Abgas dem mindestens einen Verdichter zuführbar ist.

Ferner betrifft die vorliegende Erfindung eine Brennkraftmaschine. Die Brennkraftmaschine umfasst mindestens einen Hauptkanal, mindestens einen Abgasstrang, mindestens einen Abgasturbolader und mindestens eine Niederdruck-Abgasrückführung. Dem mindestens einen Hauptkanal ist kommunikativ mindestens ein Frischgasstrang für Frischgas zugeordnet. Der mindestens eine Abgasturbolader weist in dem mindestens einen Abgasstrang eine Turbine auf. Die mindestens eine Niederdruck-Abgasrückführung entnimmt Abgas stromab der Turbine aus dem mindestens einen Abgasstrang und ist derart mit mindestens einem Bypasskanal verbunden, dass Abgas dem mindestens einen Verdichter zuführbar ist. Dabei mündet der mindestens eine Bypasskanal in den Trimmsteller.

Diese Anmeldung beansprucht die Priorität der deutschen Patentanmeldung DE 10 2013 226 081.4. Der Offenbarungsgehalt dieser Patentanmeldung DE 10 2013 226 081.4 wird hiermit vollständig durch Bezugnahme in diese Darstellung einbezogen.

Trimmsteller der eingangs genannten Art finden schon seit einiger Zeit für Verdichter in Brennkraftmaschinen Anwendung. Dabei wird in einer Brennkraftmaschine in dem mindestens einen Verdichter das über den mindestens einen Frischgasstrang eines Verbrennungsmotors zugeführte Frischgas verdichtet. Mittels des mindestens einen Trimmstellers werden die Strömungsverhältnisse am Verdichter verändert, so dass die Pumpgrenze eines Verdichterkennfelds in Richtung niedriger Massenströme bei hohen Druckverhältnissen verschoben wird. Gleichzeitig kann der mindestens eine Trimmsteller im Bereich der Pumpgrenze einen Anstieg des Verdichterwirkungsgrads bewirken, wobei dieser dabei einen Anströmungsquerschnitt von Frischgas verändert.

Es ist bekannt, dass durch eine Verschiebung der Pumpgrenze und den gleichzeitigen Anstieg des Verdichterwirkungsgrads mittels des mindestens einen Trimmstellers das dynamische Ansprechverhalten sowie der Teillastbetrieb von aufgeladenen Brennkraftmaschinen verbessert werden kann. Durch den verbesserten Systemwirkungsgrad lässt sich der Abgasgegendruck im Teillastbereich absenken, wodurch der Verbrauch der Brennkraftmaschine sinkt. Durch den Wirkungsgradanstieg und die Verschiebung der Pumpgrenze kann das maximale Motordrehmoment bereits bei vergleichsweise niedrigeren Motordrehzahlen erreicht und somit das transiente Ansprechverhalten der Brennkraftmaschine verbessert werden.

Die deutsche Offenlegungsschrift DE 10 2013 026 176 A1 offenbart eine Brennkraftmaschine, bei der ein Trimmsteller einen Konus umfasst, welcher in einer Ausführungsform aus einer Mehrzahl von Lamellen besteht. Die Lamellen sind in zwei Schichten angeordnet, wobei die Lamellen jeder Schicht zueinander beabstandet und die zwei Schichten zueinander azimutal zur Symmetrieachse des Konus versetzt sind, so dass die Lamellen einer Schicht die Abstände zwischen den Lamellen der jeweiligen anderen Schicht überdecken. Mittels eines in längsaxialer Richtung verschiebbaren, die Lamellen außenseitig umgebenden Rings können die den Austrittsquerschnitt des Konus ausbildenden Enden der Lamellen radial verschoben werden. Dadurch verändert sich die Größe des Austrittsquerschnitts und damit des Anströmungsquerschnitts, in dem das Laufrad des Verdichters angeströmt wird.

Bei heutzutage verbreiteten Verbrennungsmotoren wird zunehmend eine Niederdruck-Abgasrückführung (ND-AGR) eingesetzt, um gesetzlich vorgeschriebene Emissionsgrenzwerte zu erreichen. Das über die ND-AGR stromab einer Turbine eines Abgasturboladers entnommene Abgas wird dabei über einen Bypasskanal vor dem Verdichter des Abgasturboladers eingeleitet und von diesem mit dem Frischgas angesaugt. Dies offenbart zum Beispiel auch die deutsche Patentanmeldung DE 10 2009 000 799 A1. Ferner ist hier mindestens ein Drosselelement stromaufwärts des Verdichters in einem Abgasstrang vorgesehen, welches durch Verstellen einen Einfluss auf die Höhe des Druckgefälles und damit auf die Rückführrate, d. h. die rückgeführte Abgasmenge, nimmt.

Die deutsche Patentanmeldung mit dem Aktenzeichen DE 10 2013 003 418 A1 offenbart ebenfalls eine Brennkraftmaschine, bei der ND-AGR eingesetzt ist. Hier erfolgt die Einleitung des rückgeführten Abgases vorteilhafterweise nahe vor dem Verdichter, um eine nicht gewünschte Kondensatbildung im Frischgas zu vermeiden oder gering zu halten. Diese Anordnung hat auch den Vorteil, dass Bauraum eingespart wird. Insbesondere ist der Trimmsteller hier ein trichterförmiges Wandsystem, wobei ein Austrittsquerschnitt des Wandsystems durch ein mehr oder weniger erfolgendes Spreizen des Wandsystems veränderbar ist, so dass ein Durchlassquerschnitt für das Abgas zwischen dem Wandsystem und dem Gehäuse ausgebildet ist.

Die US 2007/266705 A1 beschreibt einen Verdichter, dessen Gehäuse einlassseitig einen zentralen Hauptkanal sowie zwei diesen umgebende Zusatzkanäle ausbildet, von denen ein innerer Zusatzkanal sowohl an dem proximal als auch distal bezüglich eines Verdichterlaufrads des Verdichters gelegenen Ende in den Hauptkanal übergeht, wodurch dieser funktional als sogenannte kennfeldstabilisierende Maßnahme dienen kann. Der äußere Zusatzkanal kann dagegen der Zufuhr einer zusätzlichen Gasströmung, bei der sich auch um rückgeführtes Abgas handeln kann, in den Verdichter dienen, wobei das bezüglich des Verdichterlaufrads proximale Ende dieses äußeren Zusatzkanals in den inneren Zusatzkanal übergeht. In diesem Übergang ist ein Klappenventil angeordnet, durch das entweder nur der innere Zusatzkanal oder nur der äußere Zusatzkanal verschlossen oder beide Zusatzkanäle freigegeben werden können.

Die WO 2007/130947 A1 offenbart schließlich ein rohrhülsenrohrförmiges Schieberventil zur Mengensteuerung einer Einleitung von rückgeführtem Abgas in einen Frischgasstrang einer Brennkraftmaschine.

Eine Aufgabe der vorliegenden Erfindung ist daher, einen Trimmsteller für mindestens einen Verdichter zu schaffen, bei dem die Zuführbarkeit von rückgeführtem Abgas verbessert ist.

Diese Aufgabe wird durch einen Trimmsteller für mindestens einen Verdichter gelöst, der die Merkmale im Anspruch 1 umfasst.

Der erfindungsgemäße Trimmsteller für mindestens einen Verdichter umfasst mindestens einen Hauptkanal und mindestens einen Bypasskanal. Dem mindestens einen Hauptkanal ist kommunikativ mindestens ein Frischgasstrang für Frischgas zugeordnet. Der mindestens eine Bypasskanal mündet in den Trimmsteller. Mindestens eine Niederdruck-Abgasrückführung ist mit dem mindestens einen Bypasskanal verbunden, so dass auch Abgas dem mindestens einen Verdichter zugeführt werden kann.

Unter einer kommunikativen Zuordnung wird im Zusammenhang der Erfindung eine fluidische Verbindung oder fluidleitende Verbindung verstanden. Die fluidische Verbindung kann auch als eine kommunizierende Verbindung bezeichnet werden. Mit anderen Worten, mit dem mindestens einen Hauptkanal ist mindestens ein Frischgasstrang für Frischgas fluidisch verbunden.

Erfindungsgemäß ist in dem Trimmsteller mindestens ein Schiebeelement angeordnet. Durch das Schiebeelement ist in dem Trimmsteller mindestens ein radial außen um das Schiebeelement führender Nebenkanal ausgebildet. Der Hauptkanal führt radial innen durch das Schiebeelement und ist von diesem umschlossen. Die Angabe radial innen beziehungsweise radial außen bezieht sich stets auf die Strömungsrichtung des Fluids in dem Hauptkanal als Achse. Der Nebenkanal ist an seinem stromaufwärtigen Ende durch das Schiebeelement verschließbar, indem das Schiebeelement gegen die Innenwand des Trimmstellers gefahren wird. In dem Fall des verschlossenen Nebenkanals steht dem durch den Frischgaskanal eintretenden Frischgas nur mehr der Strömungsweg durch den Hauptkanal zur Verfügung. Mit einem verschlossenen Nebenkanal ist nicht bezeichnet, dass in diesem Zustand der Nebenkanal einen abgeschlossenen Raum bildet. An seinem stromabwärtigen Ende kommuniziert der Nebenkanal weiterhin mit dem Hauptkanal. Ein verschlossener Nebenkanal bezeichnet lediglich, dass der Kanal an seinem stromaufwärtigen Ende im Wesentlichen gasdicht von dem Frischgaskanal getrennt ist.

Der mindestens eine Bypasskanal mündet stromabwärts des verschließbaren, stromaufwärtigen Endes des Nebenkanals in den Nebenkanal. Insbesondere mündet der Bypasskanal mit geringem Abstand zu diesem Ende in den Nebenkanal, jedenfalls vor dem stromabwärtigen Ende des Nebenkanals, an welchem der Nebenkanal wieder mit dem Hauptkanal kommuniziert. In der Niederdruck-Abgasrückführung befindet sich üblicherweise ein Ventil (EGR-Ventil), durch welches eine Abgasmenge, die über den Bypasskanal in den Nebenkanal rückgeführt wird, regelbar ist.

Der erfindungsgemäße Trimmsteller ermöglicht es vorteilhafterweise, zunächst den Durchsatz von Frischgas durch den Trimmsteller zu beeinflussen. Ist das stromaufwärtige Ende des Nebenkanals vollständig geöffnet, steht für das Frischgas der maximale Querschnitt zur Verfügung, da dieses sowohl durch den Hauptkanal als auch durch den Nebenkanal strömen kann. Diese Stellung wird dementsprechend für maximalen, möglichst verlustarmen Frischgasdurchsatz eingestellt. Ist das stromaufwärtige Ende des Nebenkanals verschlossen, steht für das Frischgas lediglich der Hauptkanal und somit ein geringerer Querschnitt zur Verfügung. Es ist vorgesehen, beliebig viele Zwischenstellungen zwischen diesen beiden Stellungen zu ermöglichen.

In einer vorteilhaften Ausführungsform der Erfindung ist vorgesehen, dass das Frischgas des Hauptkanals und das Frischgas und/oder Abgas des Nebenkanals stromaufwärts des Verdichters und in geringem Abstand zu dem Verdichter zusammengeführt wird.

In anderen Worten ist das stromabwärtige Ende des Hauptkanals nur gering von dem Eingang des Verdichters beabstandet. Insbesondere beträgt der Abstand des stromabwärtigen Endes des Hauptkanals von dem Eingang des Verdichters weniger als der Durchmesser des Hauptkanals. Durch diese Ausführung wird die Frischgasströmung des Hauptkanals vor dem Einströmen in den Eingang des Verdichters möglichst gering beeinflusst beziehungsweise verändert.

In einer bevorzugten Ausführungsform des erfindungsgemäßen Trimmstellers ist ein Querschnitt des mindestens einen Frischgasstrangs größer als ein Querschnitt des mindestens einen Hauptkanals. Folglich weist der Trimmsteller bei geschlossenem Nebenkanal somit einen sich in Strömungsrichtung betrachtet verengenden Querschnitt auf. Durch diese Ausführungsform ist somit gegeben, dass eine Strömungsgeschwindigkeit des Frischgases in dem mindestens einen Hauptkanal in Strömungsrichtung größer wird. Gleichzeitig entstehen bei geöffnetem EGR-Ventil zwischen dem schnell strömenden Frischgas und dem über den Bypasskanal und Nebenkanal einmündenden Abgas Verwirbelungen in dem stromabwärtigen Ende des Hauptkanals, so dass in der Folge eine Vermischung beider Medien erreicht wird. Bei diesem Vorgang wird somit die kinetische Energie vom Frischgas auf das Abgas übertragen, womit ein effektiver Fördermechanismus zur Verfügung steht. Zusätzlich zu der Erhöhung der Strömungsgeschwindigkeit tritt gleichzeitig eine Reduzierung des statischen Drucks des Frischgases in dem Hauptkanal ein. Da rückgeführtes Abgas immer gegen den Druck des Frischgases vor dem Verdichter zugeführt werden muss, bewirkt die Reduzierung des Drucks, dass Abgas leichter rückgeführt werden kann. Insbesondere kann ein Druck im Abgastrakt der Brennkraftmaschine (Abgasgegendruck), welcher mit dem Druck vor dem Verdichter das für die Abgasrückführung relevante Druckgefälle ergibt, geringer sein. Eine Abgasklappe, welche üblicherweise zumindest teilweise geschlossen wird, um den Abgasgegendruck zu erhöhen kann insbesondere weniger geschlossen oder ganz geöffnet werden, wodurch der Wirkungsgrad der Brennkraftmaschine verbessert ist.

Schließlich ergibt sich zusätzlich zu der besseren Vermischung und der verbesserten Rückführbarkeit von Abgas der bereits eingangs beschriebene, reduzierte Trimm der Verdichterzuströmung, wodurch die Pumpgrenze des Verdichters in Richtung geringerer Massenströme verschoben werden kann.

In einer weiteren Ausführungsform der Erfindung ist das mindestens eine Schiebeelement in einem Leitkörper, der fest in dem Trimmsteller angeordnet ist, beweglich ausgebildet. Durch den im Trimmsteller angeordneten Leitkörper, wird die oben genannte Verringerung des Querschnitts des Hauptkanals in Bezug auf den Frischgasstrang erzielt. Ferner ermöglicht der feststehende Leitkörper, dass der Abstand des stromabwärtigen Endes des Hauptkanals zu dem Eingang des Verdichters konstant gering ausgeführt werden kann.

Insbesondere kann die bewegliche Ausbildung des mindestens einen Schiebeelements konkret durch verschiedene Ansteuerungen ausgestaltet sein. So kann das mindestens eine Schiebeelement elektrisch, hydraulisch, mechanisch, pneumatisch oder magnetisch in seiner Bewegung steuerbar sein, wobei auch noch weitere Ansteuerungen realisierbar sind.

Eine vorteilhafte Ausgestaltung des erfindungsgemäßen Trimmstellers besteht darin, dass der Trimmsteller zwei Bypasskanäle umfasst. Die Bypasskanäle können dann beidseitig an dem Trimmsteller angeordnet werden. Hierdurch kann eine möglichst große Umfangsfläche erzielt werden, in welcher die Bypasskanäle mit dem Trimmsteller beziehungsweise dem Nebenkanal kommunizieren. Insbesondere erstreckt sich die gemeinsame Mündungsfläche der Bypasskanäle über mehr als 40 % des Umfangs des Trimmstellers. Im Gegensatz zu einer eher punktuellen Zuführung des rückgeführten Abgases ergibt sich so bereits bei Eintritt des Abgases in den Trimmsteller ein großes Volumen, welches für die Mischung des Abgases mit Frischgas zur Verfügung steht.

Günstige Strömungsverhältnisse in dem Hauptkanal können dadurch geschaffen werden, dass der Querschnitt des Hauptkanals über den Verlauf des Hauptkanals konstant ist. Insbesondere, wenn der Hauptkanal aus Leitkörper und Schiebeelement gebildet wird, ist darauf zu achten, dass der Leitkörper und das Schiebeelement den gleichen Innendurchmesser aufweisen.

Es wurde festgestellt, dass der erfindungsgemäße Trimmsteller weiter verbessert werden kann, indem in dem Schiebeelement und/oder dem Leitkörper Öffnungen vorgesehen sind, welche den Nebenkanal kommunikativ mit dem Hauptkanal verbinden. Die verbesserte Wirkungsweise beruht auf dem Prinzip einer Strahlpumpe, wonach aufgrund des reduzierten Drucks und der erhöhten Geschwindigkeit des Frischgases im Hauptkanal das rückgeführte Abgas durch die Öffnungen mittels Impulsübertragung beschleunigt und mitgerissen wird. Hierdurch werden eine noch bessere Vermischung des Abgases und des Frischgases und die Möglichkeit der weiteren Reduktion des Abgasgegendrucks erzielt. Eine derartige Ausbildung der Öffnungen, dass die jeweiligen Austritte der Öffnungen im Hauptkanal zu den jeweiligen Eintritten der Öffnungen im Nebenkanal einen Versatz in Strömungsrichtung der Strömung im Hauptkanal aufweisen, stellt eine besonders gute Konstruktionslösung dar. Die Öffnungen verlaufen demnach von radial außen nach innen anteilig in Strömungsrichtung, wodurch die Strömung durch die Öffnungen bereits anfänglich in Hauptkanal-Strömungsrichtung beschleunigt wird.

Im Zusammenhang der Erfindung steht auch eine Brennkraftmaschine, bei der eine variable und leicht steuerbare Mischung von Abgas und Frischgas möglich ist und diese Mischung einem Verdichter der Brennkraftmaschine zugeführt wird.

Die erfindungsgemäße Brennkraftmaschine umfasst mindestens einen Hauptkanal, mindestens einen Abgasstrang, mindestens einen Abgasturbolader und mindestens eine Niederdruck-Abgasrückführung. Dem mindesten einen Hauptkanal ist kommunikativ mindestens ein Frischgasstrang für Frischgas zugeordnet. Der mindestens eine Abgasturbolader weist in dem mindestens einen Abgasstrang eine Turbine auf. Die mindestens eine Niederdruck-Abgasrückführung entnimmt Abgas stromab der Turbine aus dem mindestens einen Abgasstrang und ist derart mit mindestens einem Bypasskanal verbunden, dass Abgas dem mindestens einen Verdichter zuführbar ist. Dabei mündet der mindestens eine Bypasskanal in den Trimmsteller.

Erfindungsgemäß ist dem mindestens einem Verdichter ein Trimmsteller nach den zuvor beschriebenen Ausgestaltungen und Ausführungsformen zugeordnet, so dass sich dadurch die für den Trimmsteller genannten Vorteile auch für die Brennkraftmaschine ergeben.

Auch kann die erfindungsgemäße Brennkraftmaschine in einer weiteren Ausführungsform ein Ventil in der mindestens einen Niederdruck-Abgasrückführung aufweisen. Dieses Ventil dient dann als Steuer- oder Regelventil für die Niederdruck-Abgasrückführung (EGR-Ventil). Die Turbine der Brennkraftmaschine kann insbesondere eine variable Turbinengeometrie (VTG) aufweisen, wodurch das Kennfeld der Turbine ähnlich dem Kennfeld des Verdichters mit dem erfindungsgemäßen Trimmsteller erweiterbar ist und das Zusammenspiel von Turbine und Verdichter verbessert ist.

Die Brennkraftmaschine kann eine fremdgezündete oder (bevorzugt) eine selbstzündende Brennkraftmaschine sein.

Im Folgenden sollen Ausführungsbeispiele die Erfindung und ihre Vorteile mit Bezugnahme auf die beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: eine schematische Querschnittsansicht des erfindungsgemäßen Trimmstellers für einen Verdichter in einer bevorzugten Ausführungsform;
- Fig. 2: eine Perspektivansicht des erfindungsgemäßen Trimmstellers nach Fig.1;
- Fig. 3, 4 und 5: einen schematischen Verlauf eines Schiebeelements in dem erfindungsgemäßen Trimmsteller gemäß einer zweiten Ausführungsform; und
- Fig. 6: eine schematische Darstellung der erfindungsgemäßen Brennkraftmaschine mit einem Trimmsteller gemäß den Fig. 1 bis 5 oder 7.
- Fig. 7: eine schematische Querschnittsansicht einer dritten Ausführungsform des erfindungsgemäßen Trimmstellers

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Trimmsteller für mindestens einen Verdichter und die erfindungsgemäße Brennkraftmaschine ausgestaltet sein können und stellen somit keine abschließende Begrenzung der Erfindung dar.

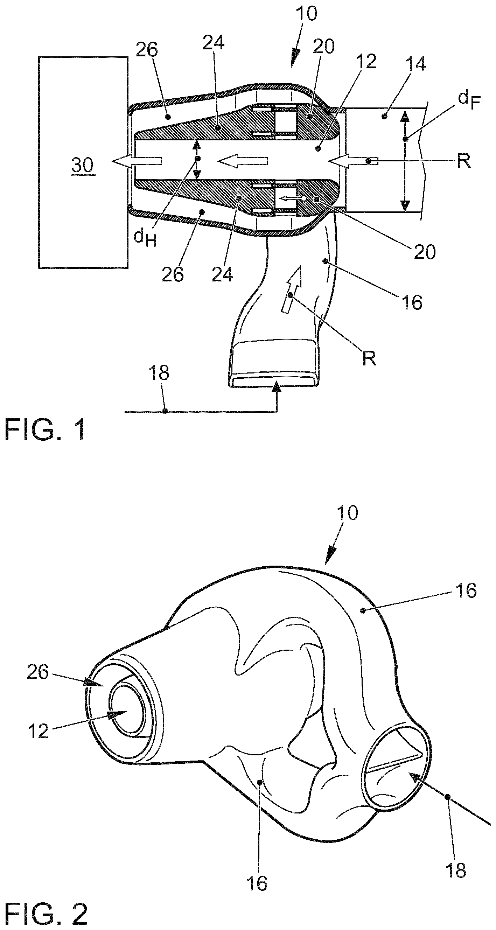

Figur 1 zeigt eine schematische Querschnittsansicht des erfindungsgemäßen Trimmstellers 10 für einen Verdichter 30 in einer bevorzugten Ausführungsform. Der Trimmsteller 10 umfasst hier einen Hauptkanal 12 und zwei Bypasskanäle 16. Da einer der beiden Bypasskanäle 16 in dieser Querschnittsansicht nicht sichtbar ist, wird an dieser Stelle auf Figur 2 verwiesen, da diese eine Perspektivansicht des erfindungsgemäßen Trimmstellers 10 nach Fig.1 darstellt, in der beide Bypasskanäle 16 dargestellt sind.

Dem Hauptkanal 12 des erfindungsgemäßen Trimmstellers 10 ist kommunikativ beziehungsweise mit fluider Verbindung ein Frischgasstrang 14 für Frischgas zugeordnet. Die beiden Bypasskanäle 16 münden in den Trimmsteller 10 und dort in den Nebenkanal 26. Zudem sind beide Bypasskanäle 16 mit einer Niederdruck-Abgasrückführung 18 verbunden, so dass dem Verdichter 30 Abgas über den Trimmsteller 10 zuführbar ist. Die Verbindung der Niederdruck-Abgasrückführung 18 mit den beiden Bypasskanälen 16 ist in Fig. 2 gezeigt. In dem Trimmsteller 10 ist entlang der Strömungsrichtung R zunächst ein Schiebeelement 20 und stromabwärts des Schiebeelements 20 ein Leitkörper 24 angeordnet. Der Leitkörper 24 ist starr, mit anderen Worten unbeweglich, in dem Trimmsteller 10 angeordnet. Das Schiebeelement 20 ist im Wesentlichen entlang der Strömungsrichtung R verschiebbar in dem Leitkörper 24 aufgenommen. Der Leitkörper 24 endet kurz vor dem stromabwärtigen Ende des Trimmstellers 10. An den Trimmsteller 10 schließt sich der nur schematisch dargestellte Verdichter 30 an. Radial innerhalb des Leitkörpers 24 und Schiebeelements 20 ist der Hauptkanal 12 ausgebildet. Radial außerhalb des Leitkörpers 24 und des Schiebeelements 20, das heißt zwischen Leitkörper 24 und Schiebeelement 20 und dem Gehäuse des Trimmstellers 10 ist der Nebenkanal 26 gebildet. Wie auch in Fig. 2 gut zu erkennen ist, weist der Nebenkanal 26 einen in Strömungsrichtung R gesehenen, ringförmigen Querschnitt auf. Die Bypasskanäle 16 münden in das Gehäuse des Trimmstellers 10 und kommunizieren mit dem Nebenkanal 26.

Fig. 1 zeigt einen Schaltzustand des Trimmstellers 10, bei welchem das Schiebeelement 20 maximal entgegen der Strömungsrichtung R verschoben ist. Eine Außenfläche des Schiebeelements 20 stößt an das Gehäuse des Trimmstellers 10 an und verschließt somit im Wesentlichen luftdicht das stromaufwärtige Ende des Nebenkanals 26. Der Frischgasstrang 14 kann demnach nicht mehr mit dem Nebenkanal 26 kommunizieren. Der Strömung steht in diesem Schaltzustand nur der Hauptkanal 12 zur Verfügung. Der Durchmesser und somit auch der Querschnitt d_{H} des Hauptkanals 12 ist kleiner als der Querschnitt d_{F} des Frischgasstrangs 14. Durch diesen Schaltzustand des Trimmstellers 10 sind durch diese Strömungsführung wie bereits eingangs beschrieben mehrere Effekte erzielbar. Der Verdichter 30 wird durch den reduzierten Querschnitt d_{H} des Hauptkanals 12 mit verkleinertem Trimm angeströmt, wodurch die Pumpgrenze des Verdichters 30 im Verdichterkennfeld in Richtung niedriger Massenströme bei hohen Druckverhältnissen verschoben wird. Weiterhin ist die Strömungsgeschwindigkeit im Hauptkanal 12 erhöht und der statische Druck reduziert, wodurch eine bessere Vermischung des über die Niederdruck-Abgasrückführung 18, die Bypasskanäle 16 und den Nebenkanal 26 rückgeführten Abgases mit dem durch den Hauptkanal 12 strömenden Frischgas vor dem Verdichter 30 ermöglicht ist. Schließlich bewirkt der reduzierte statische Druck eine bessere Zuführbarkeit des Abgases, so dass gegebenenfalls der Abgasgegendruck reduziert werden kann.

Ein nicht dargestellter Schaltzustand besteht darin, dass das Schiebeelement 20 maximal in Strömungsrichtung R und gegen den Leitkörper 24 verschoben ist. Der Nebenkanal 26 ist sowohl stromabwärts als auch stromaufwärts geöffnet, so dass Frischgas aus dem Frischgasstrang 14 in den Nebenkanal 26 strömen kann. Der Strömungsquerschnitt in dem Trimmsteller ist vergrößert, da zu dem Querschnitt d_{H} des Hauptkanals 12 der ringförmige Querschnitt des Nebenkanals 26 hinzukommt. Diese Schaltstellung wird für maximalen, möglichst verlustarmen Durchsatz an Frischgas und/oder Abgas gewählt. Der Verdichter 30 wird mit größerem Trimm angeströmt. Zwischen den beiden beschriebenen Endanschlagstellungen können beliebig viele Zwischenpositionen durch Verschieben des Schiebeelements 20 eingestellt werden. Bei der Ausführungsform gemäß Fig. 1 handelt es sich um eine bevorzugte Ausführungsform, da mittels des starr angeordneten Leitkörpers 24 das Ende des Hauptkanals 12 auch bei Verschiebung des Schiebeelements einen konstanten Abstand zum Verdichter 30 aufweist.

Figur 2 zeigt eine Perspektivansicht des erfindungsgemäßen Trimmstellers 10 nach Fig.1. Alle Elemente sind bereits in Figur 1 beschrieben, so dass auf eine erneute Beschreibung dieser verzichtet wird.

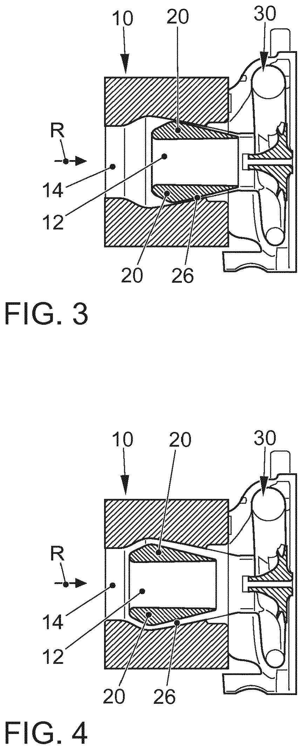

Die Figuren 3, 4 und 5 zeigen einen schematischen Verlauf der Verstellung eines Schiebeelements 20 in dem erfindungsgemäßen Trimmsteller 10 gemäß einer zweiten Ausführungsform. Diese Ausführungsform weist keinen Leitkörper 24 auf. In dem Trimmsteller 10 ist ein einziges Schiebeelement 20 angeordnet. Über nicht dargestellte Bypasskanäle 16, welche in den Trimmsteller 10 münden und mit dem Nebenkanal 26 kommunizieren, kann wiederum Abgas rückgeführt werden.

Fig. 4 zeigt eine mittlere Schaltposition des Schiebeelements 20. Der Nebenkanal 26 ist stromaufwärts geöffnet, wodurch Frischgas aus dem Frischgasstrang 14 in den Nebenkanal 26 strömen kann. Als Strömungsquerschnitt stehen innerhalb des Trimmstellers 10 der Querschnitt des Hauptkanals 12 und der Querschnitt des Nebenkanals 26 zur Verfügung. Diese Schaltposition wird für maximalen, möglichst verlustarmen Durchsatz bei großem Trimm gewählt. Abgas kann in den Nebenkanal 26 zugeführt werden.

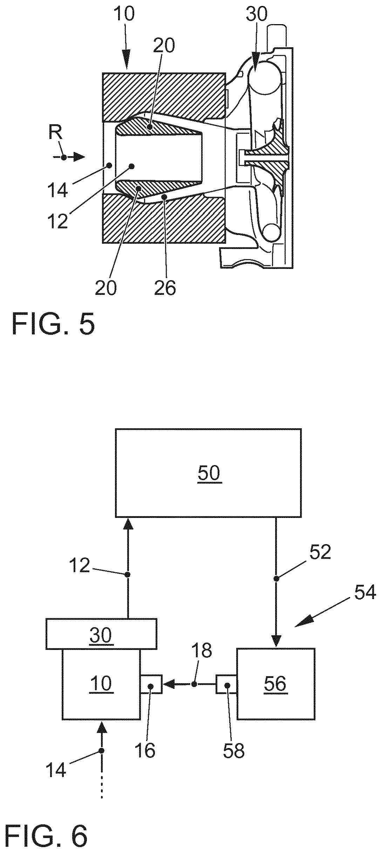

Fig. 5 zeigt eine Schaltposition, bei welcher das Schiebeelement 20 maximal entgegen der Strömungsrichtung R verschoben ist. Der Nebenkanal 26 ist an seinem stromaufwärtigen Ende verschlossen, indem das Schiebeelement 20 hier im Wesentlichen luftdicht an dem Gehäuse des Trimmstellers 10 anliegt. Diese Schaltposition wird für maximale Zuführbarkeit von rückgeführtem Abgas gewählt. Der Strömung steht im Trimmsteller 10 nur der Querschnitt des Hauptkanals 12 zur Verfügung, wodurch die Strömung beschleunigt und der statische Druck reduziert wird. Dadurch liegt für das rückgeführte Abgas, welches in den Nebenkanal 26 einströmt, ein günstiges Druckgefälle des Abgasgegendrucks zu dem Druck im Trimmsteller 10 beziehungsweise vor dem Verdichter 30 vor.

Fig. 3 zeigt eine weitere Schaltposition, bei welcher das Schiebeelement 20 maximal in Strömungsrichtung R verschoben ist. Der Nebenkanal 26 ist an seinem stromabwärtigen Ende verschlossen, indem das Schiebeelement 20 hier im Wesentlichen luftdicht an dem Gehäuse des Trimmstellers 10 anliegt. Diese Schaltposition wird für minimalen Verdichtertrimm gewählt. Der Strömung steht im Trimmsteller 10 nur der Querschnitt des Hauptkanals 12 zur Verfügung. Zusätzlich endet der Hauptkanal 12 in geringem Abstand vor dem Verdichter 30, so dass der Verdichter 30 mit dem kleinen Querschnitt des Hauptkanals 12 angeströmt wird. Hierdurch wird die Pumpgrenze des Verdichters 30 im Verdichterkennfeld in Richtung niedriger Massenströme bei hohen Druckverhältnissen verschoben.

Figur 6 zeigt eine schematische Darstellung der erfindungsgemäßen Brennkraftmaschine 50 mit einem Trimmsteller 10 für den Verdichter 30 gemäß der Fig. 1 bis 5 und 7. Die Brennkraftmaschine 50 umfasst in dieser Ausführungsform einen Hauptkanal 12, einen Abgasstrang 52, einen Abgasturbolader 54 und eine Niederdruck-Abgasrückführung 18. Dabei ist dem Hauptkanal 12 kommunikativ ein Frischgasstrang 14 für Frischgas zugeordnet. Der Abgasturbolader 54 weist in dem Abgasstrang 52 eine Turbine 56 auf. Die Niederdruck-Abgasrückführung 18 entnimmt Abgas stromab der Turbine 56 aus dem Abgasstrang 52 und ist derart mit dem Bypasskanal 16 verbunden, so dass Abgas dem mindestens einen Verdichter 30 zuführbar ist. Der Bypasskanal 16 mündet somit in den Trimmsteller 10. Erfindungsgemäß ist dem Verdichter 30 der Trimmsteller 10 aus den Figuren 1 bis 5 und 7 vorgeschaltet, so dass sich dadurch die für den Trimmsteller 10 genannten Vorteile auch für die Brennkraftmaschine 50 ergeben.

Die Brennkraftmaschine 50 kann, wie hier gezeigt, ein Ventil 58 in der Niederdruck-Abgasrückführung 18 vorsehen. Dieses Ventil 58 dient dann als Steuer- oder Regelventil für die Niederdruck-Abgasrückführung 18 und wird üblicherweise als EGR-Ventil bezeichnet.

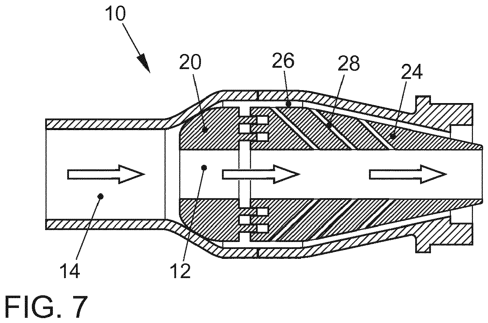

Fig. 7 zeigt eine dritte Ausführungsform des erfindungsgemäßen Trimmstellers 10 für einen Verdichter 30. Die dritte Ausführungsform stimmt im Wesentlichen mit der ersten Ausführungsform gemäß der Fig. 1 überein. Auch die dritte Ausführungsform weist im Gegensatz zu der zweiten Ausführungsform gemäß der Figuren 3 bis 5 einen starr im Trimmsteller 10 angeordneten Leitkörper 24 und ein bewegliches Schiebeelement 20 auf. Kennzeichnend für die dritte Ausführungsform sind Öffnungen 28, welche in den Leitkörper 24 eingebracht sind. Je nach Aufteilung der Einzellängen des Leitkörpers 24 und des Schiebeelements 20 auf die Gesamtlänge des Trimmstellers 10 kann es auch sinnvoll sein, die Öffnungen 28 in das Schiebeelement 20, insbesondere nur in das Schiebeelement 20, einzubringen, beispielsweise, wenn das Schiebeelement 20 wesentlich länger in Strömungsrichtung R ausgebildet ist, als in der Fig. 7 dargestellt.

Mittels der Öffnungen 28 kommuniziert der Nebenkanal 26 durch den Leitkörper 24 mit dem Hauptkanal 12. Insbesondere bei an seinem stromaufwärtigen Ende verschlossenen Nebenkanal 26, wie dies in Fig. 7 dargestellt ist, ergibt sich durch die beschleunigte und im Druck reduzierte Strömung im Hauptkanal 12 der Effekt einer Strahlpumpe, so dass die Zuführung von rückgeführtem Abgas aus dem Nebenkanal 26 weiter verbessert ist. Die Öffnungen 28 sind von radial außen nach innen strömungsgünstig in Strömungsrichtung R geneigt.

### Bezugszeichenliste

- 10: Trimmsteller
- 12: Hauptkanal
- 14: Frischgasstrang
- 16: Bypasskanal
- 18: Niederdruck-Abgasrückführung, ND-AGR
- 20: Schiebeelement
- 24: Leitkörper
- 26: Nebenkanal
- 28: Öffnungen
- 30: Verdichter
- 50: Brennkraftmaschine
- 52: Abgasstrang
- 54: Abgasturbolader
- 56: Turbine
- 58: Ventil
- d_{H}: Querschnitt des mindestens einen Hauptkanals
- d_{F}: Querschnitt des mindestens einen Frischgasstrangs
- R: Strömungsrichtung

## Patentansprüche

1. Trimmsteller (10) für mindestens einen Verdichter (30), umfassend
mindestens einen Hauptkanal (12), dem kommunikativ mindestens ein Frischgasstrang (14) für Frischgas zugeordnet ist,
mindestens einen Bypasskanal (16), der in den Trimmsteller (10) mündet,
und wobei mindestens eine Niederdruck-Abgasrückführung (18) mit dem mindestens einen Bypasskanal (16) verbunden ist, so dass Abgas dem mindestens einen Verdichter (30) zuführbar ist,
**dadurch gekennzeichnet, dass**
mindestens ein Schiebeelement (20) in dem Trimmsteller (10) angeordnet ist, welches mindestens einen radial außen um das Schiebeelement (20) führenden Nebenkanal (26) ausbildet und den radial innen durch das Schiebeelement (20) führenden Hauptkanal (12) umschließt, wobei der Nebenkanal (26) an seinem stromaufwärtigen Ende durch das Schiebeelement (20) verschließbar ist und der Bypasskanal (16) stromabwärts dieses Endes in den Nebenkanal (26) mündet.

2. Trimmsteller (10) nach Anspruch 1, **dadurch gekennzeichnet, dass** das Frischgas des Hauptkanals (12) und das Frischgas und/oder Abgas des Nebenkanals (26) stromaufwärts des Verdichters (30) und in geringem Abstand zu dem Verdichter (30) zusammengeführt wird.

3. Trimmsteller (10) nach Anspruch 1 oder 2, **dadurch gekennzeichnet, dass** ein Querschnitt (d_{F}) des mindestens einen Frischgasstrangs (14) größer ist als ein Querschnitt (d_{H}) des mindestens einen Hauptkanals (12).

4. Trimmsteller (10) nach einem der vorhergehenden Ansprüche, **dadurch gekennzeichnet, dass** das mindestens eine Schiebeelement (20) in einem Leitkörper (24), der fest in dem Trimmsteller (10) angeordnet ist, beweglich ausgebildet ist.

5. Trimmsteller (10) nach einem der vorhergehenden Ansprüche, **dadurch gekennzeichnet, dass** zwei Bypasskanäle (16) beidseitig an dem Trimmsteller (10) angeordnet sind und sich die gemeinsame Mündungsfläche der Bypasskanäle (16) über mehr als 40 % des Umfangs des Trimmstellers (10) erstreckt.

6. Trimmsteller (10) nach einem der Ansprüche 3 bis 5, **dadurch gekennzeichnet, dass** der Querschnitt (d_{H}) des mindestens einen Hauptkanals (12) konstant ist.

7. Trimmsteller (10) nach einem der vorhergehenden Ansprüche, **dadurch gekennzeichnet, dass** in dem Schiebelement (20) Öffnungen (28) vorgesehen sind, welche den Nebenkanal (26) kommunikativ mit dem Hauptkanal (12) verbinden.

8. Trimmsteller (10) nach einem der Ansprüche 4 bis 7, **dadurch gekennzeichnet, dass** in dem Leitkörper (20) Öffnungen (28) vorgesehen sind, welche den Nebenkanal (26) kommunikativ mit dem Hauptkanal (12) verbinden.

9. Trimmsteller (10) nach einem der Ansprüche 7 oder 8, **dadurch gekennzeichnet, dass** jeweilige Austritte der Öffnungen (28) im Hauptkanal (12) zu jeweiligen Eintritten der Öffnungen (28) im Nebenkanal (26) einen Versatz in Strömungsrichtung der Strömung im Hauptkanal (12) aufweisen.

10. Brennkraftmaschine (50), umfassend mindestens einen Hauptkanal (12), dem kommunikativ mindestens ein Frischgasstrang (14) für Frischgas zugeordnet ist, mindestens einen Abgasstrang (52), mindestens einen Abgasturbolader (54), der in dem mindestens einem Abgasstrang (52) eine Turbine (56) aufweist, mindestens eine Niederdruck-Abgasrückführung (18)), die Abgas stromab der Turbine (56) aus dem mindestens einem Abgasstrang (52) entnimmt und derart mit mindestens einem Bypasskanal (16) verbunden ist, wobei der mindestens eine Bypasskanal (16) in den Trimmsteller (10) mündet, so dass Abgas dem mindestens einen Verdichter (30) zuführbar ist, **dadurch gekennzeichnet, dass** dem mindestens einen Verdichter (30) ein Trimmsteller (10) gemäß einem der vorhergehenden Ansprüche zugeordnet ist.

## Claims

1. Trim adjuster (10) for at least one compressor (30), comprising
at least one main channel (12) which is assigned, in communicative fashion, at least one fresh-gas tract (14) for fresh gas,
at least one bypass channel (16) which opens into the trim adjuster (10),
and wherein at least one low-pressure exhaust-gas recirculation arrangement (18) is connected to the at least one bypass channel (16) such that exhaust gas can be supplied to the at least one compressor (30),
**characterized in that**
at least one slide element (20) is arranged in the trim adjuster (10), which at least one slide element forms at least one secondary channel (26) which leads around the slide element (20) radially at the outside, and which at least one slide element surrounds the main channel (12) which leads through the slide element (20) radially at the inside, wherein the secondary channel (26) can be closed off at its upstream end by means of the slide element (20), and the bypass channel (16) opens into the secondary channel (26) downstream of said end.

2. Trim adjuster (10) according to Claim 1, **characterized in that** the fresh gas of the main channel (12) and the fresh gas and/or exhaust gas of the secondary channel (26) are merged upstream of the compressor (30) and at a short distance from the compressor (30).

3. Trim adjuster (10) according to Claim 1 or 2, **characterized in that** a cross section (d_{F}) of the at least one fresh-gas tract (14) is larger than a cross section (d_{H}) of the at least one main channel (12) .

4. Trim adjuster (10) according to one of the preceding claims, **characterized in that** the at least one slide element (20) is formed so as to be movable in a guide body (24) which is arranged fixedly in the trim adjuster (10).

5. Trim adjuster (10) according to one of the preceding claims, **characterized in that** two bypass channels (16) are arranged at both sides on the trim adjuster (10), and the common opening area of the bypass channels (16) extends over more than 40% of the circumference of the trim adjuster (10) .

6. Trim adjuster (10) according to one of Claims 3 to 5, **characterized in that** the cross section (d_{H}) of the at least one main channel (12) is constant.

7. Trim adjuster (10) according to one of the preceding claims, **characterized in that**, in the slide element (20), there are provided openings (28) which connect the secondary channel (26) in communicative fashion to the main channel (12).

8. Trim adjuster (10) according to one of Claims 4 to 7, **characterized in that**, in the guide body (20), there are provided openings (28) which connect the secondary channel (26) in communicative fashion to the main channel (12).

9. Trim adjuster (10) according to one of Claims 7 and 8, **characterized in that** respective outlets of the openings (28) in the main channel (12) have an offset, in the flow direction of the flow in the main channel (12), with respect to respective inlets of the openings (28) in the secondary channel (26).

10. Internal combustion engine (50), comprising at least one main channel (12) which is assigned, in communicative fashion, at least one fresh-gas tract (14) for fresh gas, at least one exhaust tract (52), at least one exhaust-gas turbocharger (54) which has a turbine (56) in the at least one exhaust tract (52), at least one low-pressure exhaust-gas recirculation line (18) which extracts exhaust gas from the at least one exhaust tract (52) downstream of the turbine (56) and which is thus connected to at least one bypass channel (16), wherein the at least one bypass channel (16) opens into the trim adjuster (10) such that the exhaust gas can be supplied to the at least one compressor (30), **characterized in that** the at least one compressor (30) is assigned a trim adjuster (10) according to one of the preceding claims.

## Revendications

1. Organe de compensation (10) pour au moins un compresseur (30), comprenant
au moins un conduit principal (12) auquel est associée de manière communicante au moins une ligne de gaz frais (14) pour du gaz frais,
au moins un conduit de dérivation (16), qui débouche dans l'organe de compensation (10),
et au moins une recirculation de gaz d'échappement à basse pression (18) étant connectée à l'au moins un conduit de dérivation (16), de telle sorte que du gaz d'échappement puisse être acheminé à l'au moins un compresseur (30),
**caractérisé en ce**
**qu'**au moins un élément coulissant (20) est disposé dans l'organe de compensation (10), lequel constitue au moins un conduit secondaire (26) conduisant radialement à l'extérieur autour de l'élément coulissant (20) et lequel entoure le conduit principal (12) conduisant radialement à l'intérieur à travers l'élément coulissant (20), le conduit secondaire (26) pouvant être fermé à son extrémité amont par l'élément coulissant (20) et le conduit de dérivation (16) débouchant en aval de cette extrémité dans le conduit secondaire (26) .

2. Organe de compensation (10) selon la revendication 1, **caractérisé en ce que** le gaz frais du conduit principal (12) et le gaz frais et/ou le gaz d'échappement du conduit secondaire (26) sont réunis en amont du compresseur (30) et à faible distance du compresseur (30).

3. Organe de compensation (10) selon la revendication 1 ou 2, **caractérisé en ce qu'**une section transversale (d_{F}) de l'au moins une ligne de gaz frais (14) est supérieure à une section transversale (d_{H}) de l'au moins un conduit principal (12).

4. Organe de compensation (10) selon l'une quelconque des revendications précédentes, **caractérisé en ce que** l'au moins un élément coulissant (20) est réalisé de manière déplaçable dans un corps de guidage (24) qui est disposé fixement dans l'organe de compensation (10).

5. Organe de compensation (10) selon l'une quelconque des revendications précédentes, **caractérisé en ce que** deux conduits de dérivation (16) sont disposés de chaque côté de l'organe de compensation (10) et la surface d'embouchure commune des conduits de dérivation (16) s'étend sur plus de 40 % de la périphérie de l'organe de compensation (10).

6. Organe de compensation (10) selon l'une quelconque des revendications 3 à 5, **caractérisé en ce que** la section transversale (d_{H}) de l'au moins un conduit principal (12) est constante.

7. Organe de compensation (10) selon l'une quelconque des revendications précédentes, **caractérisé en ce que** des ouvertures (28) sont prévues dans l'élément coulissant (20), lesquelles relient le conduit secondaire (26) de manière communicante avec le conduit principal (12).

8. Organe de compensation (10) selon l'une quelconque des revendications 4 à 7, **caractérisé en ce que** des ouvertures (28) sont prévues dans le corps de guidage (20), lesquelles relient le conduit secondaire (26) de manière communicante avec le conduit principal (12).

9. Organe de compensation (10) selon l'une quelconque des revendications 7 ou 8, **caractérisé en ce que** des sorties respectives des ouvertures (28) dans le conduit principal (12) vers des entrées respectives des ouvertures (28) dans le conduit secondaire (26) présentent un décalage dans le sens d'écoulement par rapport à l'écoulement dans le conduit principal (12).

10. Moteur à combustion interne (50) comprenant au moins un conduit principal (12), auquel est associée de manière communicante au moins une ligne de gaz frais (14) pour du gaz frais, au moins une ligne de gaz d'échappement (52), au moins un turbocompresseur à gaz d'échappement (54) qui présente une turbine (56) dans l'au moins une ligne de gaz d'échappement (52), au moins une recirculation de gaz d'échappement à basse pression (18) qui prélève du gaz d'échappement en aval de la turbine (56) depuis l'au moins une ligne de gaz d'échappement (52) et qui est connectée à l'au moins un conduit de dérivation (16) de telle sorte, l'au moins un conduit de dérivation (16) débouchant dans l'organe de compensation (10), de telle sorte que le gaz d'échappement puisse être acheminé à l'au moins un compresseur (30), **caractérisé en ce qu'**un organe de compensation (10) selon l'une quelconque des revendications précédentes est associé à l'au moins un compresseur (30).
